# FASCICULE DE BREVET EUROPEEN

(11) **EP 3 260 982 B1**
(45) Date de publication et mention de la délivrance du brevet: **06.03.2019**
(21) Numéro de dépôt: 17176172.9
(22) Date de dépôt: 15.06.2017
(51) Int. Cl.: G06F 11/18, G06F 11/20

(54) **PROCEDE DE RECEPTION GARANTIE DE SIGNAUX COMMUNS DANS UN SYSTEME AVIONIQUE COMPORTANT UNE PLURALITE DE CALCULATEURS ELECTRONIQUES**
VERFAHREN ZUM GARANTIERTEN EMPFANG VON ALLGEMEINEN SIGNALEN IN EINEM FLUGZEUGSYSTEM, DAS EIN VIELZAHL VON ELEKTRONISCHEN RECHNERN UMFASST
METHOD FOR GUARANTEED RECEPTION OF COMMON SIGNALS IN AN AVIONICS SYSTEM COMPRISING A PLURALITY OF ELECTRONIC COMPUTERS

(30) Priorité: 21.06.2016 FR 1600984
(43) Date de publication de la demande: 27.12.2017
(73) Titulaire: Thales, 92400 Courbevoie (FR)
(72) Inventeur: TREUCHOT, Stéphane, 33700 MERIGNAC (FR)
(74) Mandataire: Bréda, Jean-Marc

(56) Documents cités:
- EP-A1- 2 709 010
- US-A- 4 718 002
- US-A- 5 528 761

## Description

Le domaine de l'invention est celui des architectures électroniques et numériques des systèmes avioniques à logiciel prépondérant.

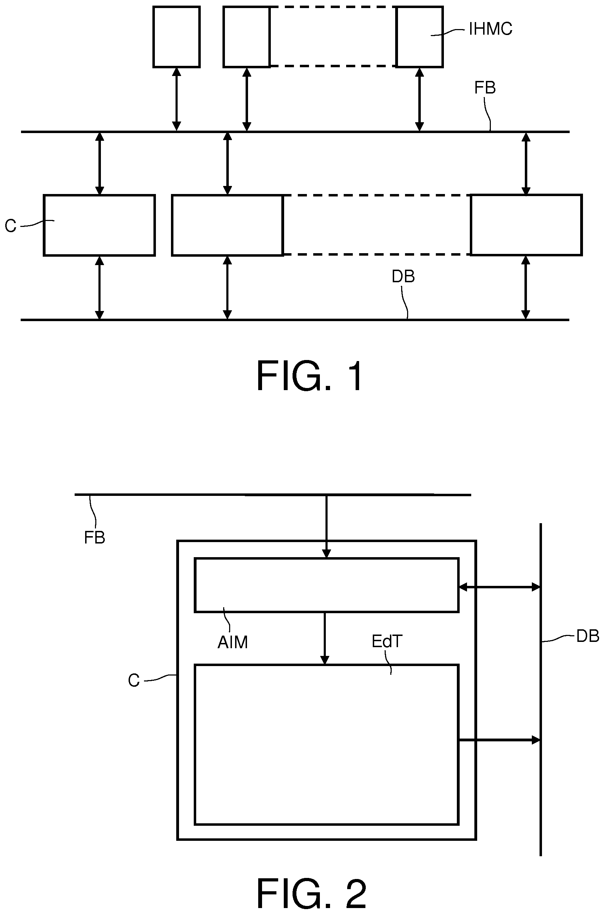

Une telle architecture est représentée sur la figure 1. Elle comporte au moins des dispositifs électroniques IHMC qui sont essentiellement des interfaces hommes-machines de commande et plusieurs calculateurs électroniques C. Les dispositifs sont reliés aux différents calculateurs au moyen d'un premier bus de données FB connu sous le nom de « Bus-Terrain » ou en terminologie anglo-saxonne « Field-Bus ». Dans la suite du texte, les données émises par les dispositifs sont appelées « événements ». Une fois traités, les événements sont envoyés par les différents calculateurs électroniques sur un second bus de données DB ou « Data-Bus » pour être pris en compte par les différents dispositifs du système avionique.

Les différents calculateurs C réagissent aux événements externes de deux façons possibles. Dans un premier mode de fonctionnement, chaque calculateur traite les différents événements. Les calculateurs sont indépendants. Dans un second mode de fonctionnement, chaque calculateur traite au moins un événement commun à un autre calculateur au profit d'une même fonction définie. Il y a alors dépendance entre les calculateurs.

Dans ce dernier cas, la cohérence globale du système nécessite une synchronisation des calculateurs. La synchronisation est à la fois temporelle et fonctionnelle. La synchronisation doit être fonctionnelle dans la mesure où les événements traités sont les mêmes. La synchronisation doit être temporelle parce que les événements perçus par les calculateurs doivent être effectivement perçus dans le même ordre pour préserver l'intégrité et la cohérence du système et parce que la gigue de perception temporelle est contrainte par les latences globales du système.

Plusieurs solutions sont possibles pour assurer cette synchronisation. Ce besoin d'intégrité ou de synchronisme dans un système est souvent couvert par une solution matérielle dédiée qui peut être, par exemple, une redondance de bus et/ou une horloge physique commune et/ou un contrôle par un ou plusieurs systèmes maîtres. Dans la plupart des applications, seule une de ses solutions est mise en oeuvre. A titre d'exemple, le brevet FR 2 925 191 intitulé «Architecture de traitement numérique à haute intégrité à multiples ressources supervisées » décrit une architecture numérique comportant deux voies de calcul synchronisées comportant un module de supervision supportant de manière paramétrable différents modes de comparaison des données desdites voies.

La demande de brevet EP2709010 divulgue plusieurs algorithmes de consensus dans un système avionique comportant une pluralité de calculateurs où, en cas de défaillance d'un noeud, un quorum est négocié entre les calculateurs pour valider un résultat, le noeud défaillant étant désormais écarté.

Le brevet US5528761 décrit un algorithme pour valider l'émission d'un message à plusieurs calculateurs lorsque tous les calculateurs ont confirmé la réception.
Le brevet US4718002 décrit un algorithme pour informer plusieurs noeuds de manière cyclique en évitant la duplication des messages de mise à jour et fait appel à un noeud dédié pour garantir le bon fonctionnement de l'algorithme.

Dans le domaine du grand public, le protocole internet standardisé « NTP », acronyme de « Network Time Protocol » permet la synchronisation des horloges de plusieurs systèmes.

Cependant, répondre à ce besoin de synchronisation dans un système dont les propriétés technologiques intrinsèques ne l'assurent pas reste inhabituel. Par ailleurs, la solution doit répondre aux contraintes spécifiques du domaine aéronautique, c'est-à-dire un déterminisme fort, une faible latence et une faible empreinte sur le réseau.

Une solution possible consiste à avoir une approche a posteriori qui consiste à corriger les erreurs au fur et à mesure qu'elles se produisent. Un des inconvénients de ce procédé est que les corrections sont nécessairement spécifiques car elles reposent sur la nature fonctionnelle des erreurs. Un autre inconvénient est que la complétude des cas d'erreurs traité est difficile à démontrer. Enfin, la latence en cas d'erreurs peut être importante car le système passe potentiellement par plusieurs états instables successifs.

Le procédé selon l'invention ne présente pas ces inconvénients. Il consiste à ajouter une « couche » logiciel identique et simple à tous les calculateurs. La fonction essentielle de cette couche logicielle est d'échanger avec les autres calculateurs des données de synchronisation concernant les événements physiques reçus par chaque calculateur par le fieldbus. Les événements ne sont traités que lorsque chaque calculateur a connaissance que tous les autres calculateurs ont bien reçu l'événement.

Plus précisément, l'invention a pour objet un procédé de réception garantie et de traitement d'un « événement » sous forme d'un signal numérique dans un système avionique comportant une pluralité de calculateurs électroniques reliés entre eux par un bus de données, chaque calculateur comportant une électronique de traitement de données,
caractérisé en ce que chaque calculateur électronique comporte une même couche logiciel, qui, à réception d'un événement, réalise les étapes suivantes :
- A un premier instant, émission vers chacun des autres calculateurs électroniques d'un premier signal attestant de la réception dudit événement par ledit calculateur électronique, un et un seul des calculateurs électroniques émettant une estampille représentative dudit premier instant ;
- A un second instant dit « TimeOut ACK », si ledit calculateur électronique n'a pas reçu au moins un des premiers signaux issu d'un des autres calculateurs électroniques, émission d'un second signal dit d'échec vers chacun des autres calculateurs électroniques attestant de l'absence de réception dudit premier signal ;
- A un troisième instant dit « TimeOut GARANTEED », si un second signal dit d'échec a été reçu par ledit calculateur électronique, absence de prise en compte de l'événement par ledit calculateur électronique et si aucun signal d'échec n'a été reçu par ledit calculateur électronique, prise en compte de l'événement selon l'ordre temporel défini par l'estampille par l'électronique de traitement de données dudit calculateur électronique.

Avantageusement, lorsque deux événements de même valeur fonctionnelle sont émis successivement, le second événement n'est pris en compte par les couches logiciel des calculateurs électroniques que si l'événement précédent est abandonné ou traité par les électroniques de traitement de données desdits calculateurs électroniques.

Avantageusement, la pluralité de calculateurs électroniques fonctionnant de façon cyclique, le nombre de cycles s'écoulant entre la réception de l'événement physique et la prise en compte possible par les différentes électroniques de traitement des calculateurs électroniques est de l'ordre de cinq.

Avantageusement, l'événement est issu des interfaces homme-machine du système avionique.

L'invention sera mieux comprise et d'autres avantages apparaîtront à la lecture de la description qui va suivre donnée à titre non limitatif et grâce aux figures annexées parmi lesquelles :
La figure 1 représente l'architecture électronique générale d'un système avionique ;
La figure 2 représente l'architecture d'un calculateur mettant en oeuvre le procédé de réception garantie selon l'invention ;
La figure 3 représente les principales étapes réalisées par la couche logicielle selon l'invention ;
Les figures 4 et 5 représentent la mise en oeuvre de la couche logicielle selon l'invention selon qu'un événement extérieur est reçu correctement ou pas.

Le procédé selon l'invention est mis en oeuvre dans une architecture système telle que représentée sur la figure 1. Elle comporte des dispositifs électroniques qui sont essentiellement des interfaces hommes-machines de commande et plusieurs calculateurs électroniques. A titre d'exemple, les interfaces de commande sont généralement des claviers de commande. On note N le nombre de calculateurs du système avionique. Dans un système avionique typique, le nombre N de calculateurs est compris entre quatre et huit. Les dispositifs sont reliés aux différents calculateurs au moyen d'un premier bus de données connu sous le nom de « Field-Bus ». Les données émises par les dispositifs sont appelées « événements ». A titre d'exemple, un événement correspond à l'appui sur une touche d'un clavier par un utilisateur.

Chaque calculateur électronique comporte une électronique de traitement de données. Une fois traités, les événements sont envoyés par les différents calculateurs électroniques sur un second bus de données ou « Data-Bus » pour être pris en compte par les différents dispositifs du système avionique.

Dans le procédé selon l'invention, comme représenté en figure 2, chaque calculateur C comporte une couche logicielle ou instance appelée « AIM », acronyme signifiant « Asynchronism & Integrity Manager » disposée en amont de l'électronique de traitement EdT et dont la fonction est de garantir la parfaite réception des différents événements avant qu'ils ne soient traités. A chaque réception d'un nouvel événement, chaque couche logiciel AIM dialogue avec les autres couches logiciel AIM des autres calculateurs et, en fonction de ce dialogue, transmet ou non l'événement à l'électronique de traitement EdT du calculateur électronique C.

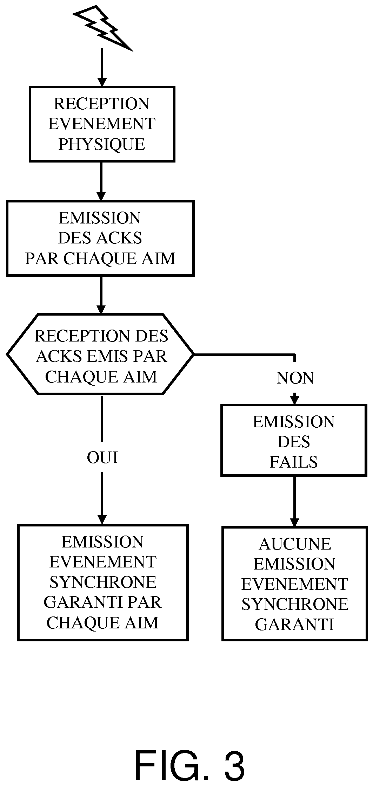

Chaque fois qu'un calculateur électronique reçoit un événement, sa couche logiciel AIM réalise les étapes suivantes, comme illustré en figure 3. Sur cette figure, l'événement physique est représenté par un éclair.

A un premier instant, l'instance AIM émet vers chacun des autres calculateurs électroniques un premier signal dit « ACK » attestant de la réception de l'événement par ledit calculateur électronique. Un et un seul des calculateurs électroniques joue le rôle d' « estampilleur » ou horloge logique. Ce calculateur estampilleur émet une estampille représentative dudit premier instant. Cette estampille est nécessaire pour assurer l'émission des événements garantis dans un ordre unique. Les événements physiques sont alors réordonnés selon cet ordre lors de l'événement synchrone garanti. Le choix de ce calculateur est arbitraire. L'estampille est émise simultanément avec le signal ACK.

Par conséquent, si tout fonctionne bien, les N calculateurs émettent tous un signal ACK provenant des autres calculateurs et chaque calculateur reçoit donc N-1 signaux ACK.

A un second instant dit « TimeOut ACK », si un calculateur électronique n'a pas reçu au moins un des premiers signaux ACK issu d'un des autres calculateurs électroniques, il émet un second signal dit d'échec ou « FAIL » vers chacun des autres calculateurs électroniques attestant de l'absence de réception dudit premier signal. Le second instant est calculé de façon que les signaux ACK puissent parvenir aux différents calculateurs.

A un troisième instant dit « TimeOut GARANTEED », si un second signal d'échec a été reçu par les calculateurs électroniques, ceux-ci, dans leur totalité, ne prennent pas en compte l'événement qui n'est donc pas traité par les différents calculateurs électroniques. Si, au contraire, aucun signal d'échec n'a été reçu par l'ensemble des calculateurs électroniques, les différentes électroniques de traitement de données des calculateurs électroniques prennent en compte l'événement. En d'autres termes, la défaillance d'une seule liaison entraîne l'absence de prise en compte de l'événement. On obtient ainsi un système hautement sécurisé.

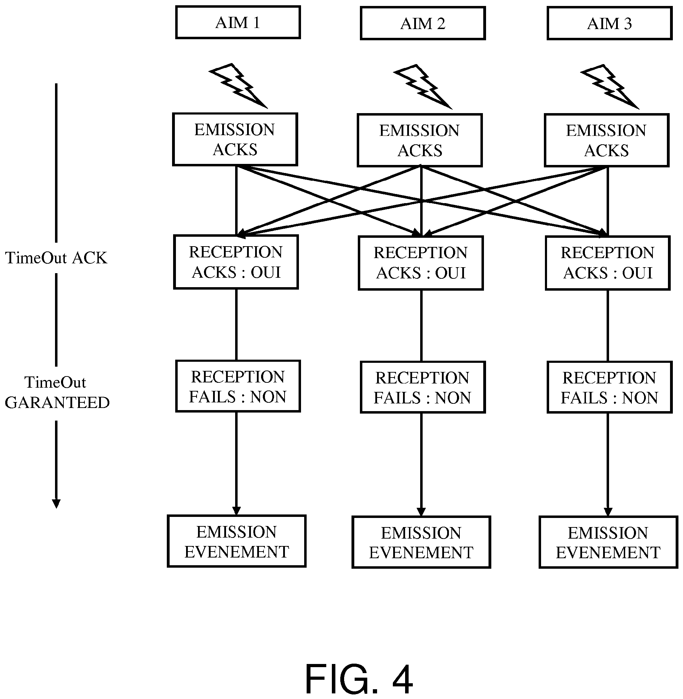

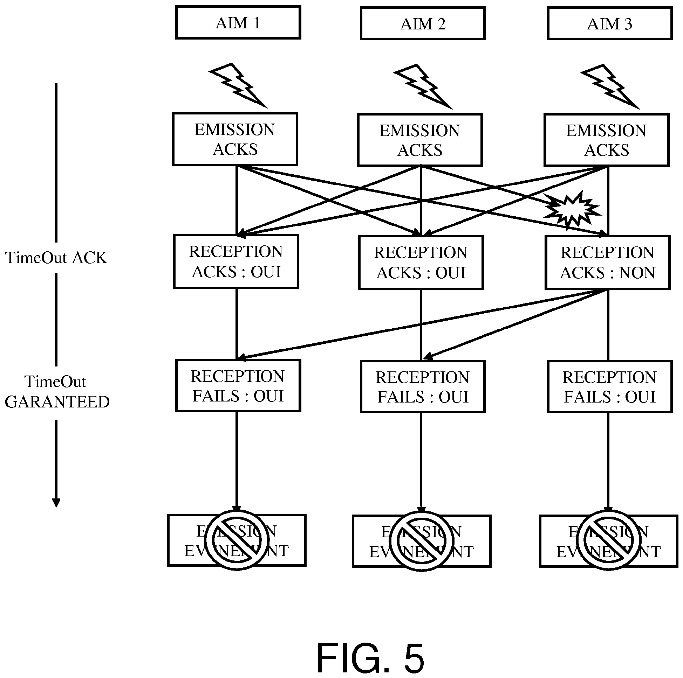

Les figures 4 et 5 illustrent les différentes étapes du procédé dans le cas simple d'un système comportant trois calculateurs électroniques. Chaque calculateur comporte une instance AIM. Celles-ci sont notées AIM1, AIM2 et AIM3.

Dans le cas de la figure 4, tout fonctionne parfaitement. A réception d'un événement, les trois instances AIM1, AIM2 et AIM3 émettent leurs signaux ACK respectifs vers les deux autres instances. Ainsi, l'instance AIM1 émet vers AIM2 et AIM3. A l'instant « TimeOut ACK », les trois instances reçoivent donc confirmation de l'événement par les deux autres instances. Par conséquent, elles n'émettent aucun signal d'échec « FAIL ». A l'instant dit « TimeOut GARANTEED », les trois calculateurs ont donc la confirmation que les deux autres calculateurs ont également reçu l'événement. L'événement est transmis aux électroniques de traitement des trois calculateurs dans l'ordre temporel défini par l'estampille.

Dans le cas de la figure 5, à réception d'un événement, les trois instances AIM1, AIM2 et AIM3 émettent leurs signaux ACK respectifs vers les deux autres instances. Cependant, comme on le voit sur la figure 5, l'émission du signal ACK émis par l'instance AIM2 ne parvient pas à l'instance AIM3. Ce défaut est symbolisé par une explosion sur la figure 5. A l'instant « TimeOut ACK », l'instance AIM3 n'a pas reçu de signal de l'instance AIM2. Par conséquent, elle émet un signal d'échec « FAIL » vers AIM1 et AIM2. A l'instant dit « TimeOut GARANTEED », les trois calculateurs ont donc reçu un signal d'échec. Aucun événement n'est transmis à aucune des électroniques de traitement des trois calculateurs. Cette absence de transmission est symbolisée par le panneau « sens interdit » sur la figure 5. Ainsi, il n'y a aucun risque de dysfonctionnement. Dès qu'il y a un problème, l'ensemble des calculateurs ne prend plus en compte les événements.

Lorsque le problème persiste, c'est-à-dire lorsque plusieurs événements successifs ne sont pas pris en compte, le système avionique prévient le pilote qui peut soit redémarrer tout le système soit mettre hors circuit le calculateur électronique défaillant.

Les calculateurs électroniques fonctionnent de façon cyclique. La mise en oeuvre du procédé selon l'invention nécessite environ cinq cycles entre la réception de l'événement physique et la prise en compte possible par les différentes électroniques de traitement des calculateurs électroniques, ce qui est peu et ne retarde que faiblement la prise en compte de l'événement par les électroniques de traitement. L'ordre de grandeur du temps passé pour garantir l'événement est de l'ordre de quelques dizaines de millisecondes.

Lorsque deux événements de même valeur fonctionnelle sont émis successivement, le second événement n'est pris en compte par les couches logiciel AIM des calculateurs électroniques que si l'événement précédent est abandonné ou traité par les électroniques de traitement de données desdits calculateurs électroniques. Dans le cas contraire l'événement est ignoré. Aucun estampillage temporel des évènements par les interfaces hommes-machine de commande n'est nécessaire. Là encore, cela signifie qu'il faut attendre environ cinq cycles pour qu'un second événement soit pris en compte par le système.

Le procédé selon l'invention ne nécessite que des opérations élémentaires et est simple à mettre en oeuvre. A titre d'exemple, il nécessite environ 500 lignes de code en langage C.

Pour des calculateurs répartis au sein d'un même système dont le comportement est défini par des évènements communs, la solution selon l'invention résout les problèmes de synchronisation et d'intégrité, au sens de la cohérence du système.

Le procédé selon l'invention permet d'apporter une solution qui ne dépend pas du comportement proprement dit du système. Elle applique le principe dit de « separation of concern », car elle ne s'applique qu'aux propriétés attendues des évènements et non à leur définition fonctionnelle. Ceci présente deux avantages majeurs qui sont :
- La simplicité : la solution est technique et non fonctionnelle.
- La pérennité : la solution ne dépend pas du produit.

Par ailleurs, la nature de la solution technique possède des qualités intrinsèques :
- Elle est totalement symétrique : aucune des instances n'est différentes des autres instances. L'horloge logique n'est assignée qu'à un instant donné et ne privilégie aucune partie du système au détriment d'une autre.
- Elle ne comporte pas de « boucle » : la stratégie par attente de défaillance introduit un traitement purement linéaire, qui ne repose sur aucune dépendance cyclique. Le comportement est déterministe. La preuve de bon comportement du système est facilitée, améliorant ainsi la sûreté du système.
- Sa latence est minimale. La latence introduite est la latence minimale théorique atteignable pour traiter une erreur de cohérence sur un système réparti.
- Elle évite d'introduire des erreurs. La stratégie retenue est de ne laisser entrer dans le système aucune incohérence. Le reste du design du système s'en trouve grandement simplifié. Les erreurs de synchronisme et d'intégrité ne sont pas à traiter par ailleurs.
- Elle permet la détection d'incohérence du système. En gérant les erreurs à bas niveau, l'algorithme mis en oeuvre permet d'identifier les éléments en défaillance. Une architecture de traitement des défaillances de plus haut niveau peut alors s'appuyer sur ces résultats.

## Revendications

1. Procédé de réception garantie et de traitement d'un « événement » sous forme d'un signal numérique dans un système avionique comportant une pluralité de calculateurs électroniques (C) reliés entre eux par un bus de données (FB), chaque calculateur comportant une électronique de traitement de données (EdT),
**caractérisé en ce que** chaque calculateur électronique comporte une même couche logiciel (AIM), qui, à réception d'un événement, réalise les étapes suivantes :
- A un premier instant, émission vers chacun des autres calculateurs électroniques d'un premier signal (ACK) attestant de la réception dudit événement par ledit calculateur électronique, un et un seul des calculateurs électroniques émettant une estampille représentative dudit premier instant ;
- A un second instant dit « TimeOut ACK », si ledit calculateur électronique n'a pas reçu au moins un des premiers signaux issu d'un des autres calculateurs électroniques, émission d'un second signal (FAIL) dit d'échec vers chacun des autres calculateurs électroniques attestant de l'absence de réception dudit premier signal ;
- A un troisième instant dit « TimeOut GARANTEED », si un second signal dit d'échec a été reçu par ledit calculateur électronique, absence de prise en compte de l'événement par ledit calculateur électronique et si aucun signal d'échec n'a été reçu par ledit calculateur électronique, prise en compte de l'événement, selon l'ordre temporel défini par l'estampille, par l'électronique de traitement de données dudit calculateur électronique.

2. Procédé de réception garantie et de traitement d'un événement selon la revendication 1, **caractérisé en ce que**, lorsque deux événements de même valeur fonctionnelle sont émis successivement, le second événement n'est pris en compte par les couches logiciel des calculateurs électroniques que si l'événement précédent est abandonné ou traité par les électroniques de traitement de données desdits calculateurs électroniques.

3. Procédé de réception garantie et de traitement d'un événement selon l'une des revendications précédentes, **caractérisé en ce que** la pluralité de calculateurs électroniques fonctionnant de façon cyclique, le nombre de cycles s'écoulant entre la réception de l'événement physique et la prise en compte possible par les différentes électroniques de traitement des calculateurs électroniques est de l'ordre de cinq.

4. Procédé de réception garantie et de traitement d'un événement selon l'une des revendications précédentes, **caractérisé en ce que** l'événement est issu des interfaces homme-machine de commande du système avionique.

## Patentansprüche

1. Verfahren zum Garantieren des Empfangs und zum Verarbeiten eines "Ereignisses" in Form eines digitalen Signals in einem Luftfahrtsystem, das mehrere elektronische Rechner (C) umfasst, die durch einen Datenbus (FB) miteinander verbunden sind, wobei jeder elektronische Rechner eine Datenverarbeitungselektronik (EdT) umfasst,
**dadurch gekennzeichnet, dass** jeder elektronische Rechner eine und dieselbe Software-Schicht (AIM) umfasst, die nach dem Empfang eines Ereignisses die folgenden Schritte durchführt:
- Senden, zu einem ersten Zeitpunkt, zu jedem der anderen elektronischen Rechner, eines ersten Signals (ACK), das den Empfang des Ereignisses durch den elektronischen Rechner bestätigt, wobei ein einziger der elektronischen Rechner einen Zeitstempel sendet, der den ersten Zeitpunkt repräsentiert;
- Senden, zu einem zweiten Zeitpunkt, "TimeOut ACK" genannt, wenn der elektronische Rechner nicht wenigstens eines der ersten Signale von einem der anderen elektronischen Rechner empfangen hat, eines zweiten Signals (FAIL), Fehlersignal genannt, zu jedem der anderen elektronischen Rechner, das den Nichtempfang des ersten Signals bestätigt;
- Nichtberücksichtigen, zu einem dritten Zeitpunkt, "TimeOut GARANTEED" genannt, wenn ein zweites Fehlersignal von dem elektronischen Rechner empfangen wurde, des Ereignisses durch den elektronischen Rechner und Berücksichtigen des Ereignisses, wenn kein Fehlersignal von dem elektronischen Rechner empfangen wurde, in der durch den Zeitstempel definierten zeitlichen Reihenfolge, durch die Datenverarbeitungselektronik des elektronischen Rechners.

2. Verfahren zum Garantieren des Empfangs und zum Verarbeiten eines Ereignisses nach Anspruch 1, **dadurch gekennzeichnet, dass**, wenn zwei Ereignisse desselben funktionellen Werts nacheinander gesendet werden, das zweite Ereignis von den Software-Schichten des elektronischen Rechners nur dann berücksichtigt wird, wenn das vorherige Ereignis von den Datenverarbeitungselektroniken der elektronischen Rechner verworfen oder verarbeitet wird.

3. Verfahren zum Garantieren des Empfangs und zum Verarbeiten eines Ereignisses nach einem der vorherigen Ansprüche, **dadurch gekennzeichnet, dass**, da die mehreren elektronischen Rechner auf zyklische Weise arbeiten, die Anzahl von Zyklen zwischen dem Empfang des physischen Ereignisses und der möglichen Berücksichtigung durch die unterschiedlichen Verarbeitungselektroniken der elektronischen Rechner etwa fünf beträgt.

4. Verfahren zum Garantieren des Empfangs und zum Verarbeiten eines Ereignisses nach einem der vorherigen Ansprüche, **dadurch gekennzeichnet, dass** das Ereignis von den Mensch-Maschine-Steuerschnittstellen des Luftfahrtsystems stammt.

## Claims

1. Method of guaranteed reception and of processing of an "event" in the form of a digital signal in an avionics system comprising a plurality of electronic computers (C) linked together by a data bus (FB), each computer comprising data processing electronics (EdT),
**characterized in that** each electronic computer comprises one and the same software layer (AIM), which, on receipt of an event, carries out the following steps:
- at a first instant, sending to each of the other electronic computers of a first signal (ACK) attesting the reception of said event by said electronic computer, one and only one of the electronic computers sending a stamp representative of said first instant;
- at a second instant termed "TimeOut ACK", if said electronic computer has not received at least one of the first signals emanating from one of the other electronic computers, sending of a second so-called failure signal (FAIL) to each of the other electronic computers attesting the absence of reception of said first signal;
- at a third instant termed "TimeOut GARANTEED", if a second so-called failure signal has been received by said electronic computer, absence of taking into account of the event by said electronic computer and if no failure signal has been received by said electronic computer, taking into account of the event, according to the temporal order defined by the stamp, by the data processing electronics of said electronic computer.

2. Method of guaranteed reception and of processing of an event according to claim 1, **characterized in that**, when two events of the same functional value are sent successively, the second event is taken into account by the software layers of the electronic computers only if the previous event is abandoned or processed by the data processing electronics of said electronic computers.

3. Method of guaranteed reception and of processing of an event according to one of the preceding claims, **characterized in that** the plurality of electronic computers operating in a cyclic manner, the number of cycles elapsing between the reception of the physical event and the possible taking into account by the various processing electronics of the electronic computers is of the order of five.

4. Method of guaranteed reception and of processing of an event according to one of the preceding claims, **characterized in that** the event emanates from the man-machine control interfaces of the avionics system.
